# EUROPEAN PATENT SPECIFICATION

(11) **EP 1 667 271 B1**
(45) Date of publication and mention of the grant of the patent: **31.03.2010**
(21) Application number: 05111288.6
(22) Date of filing: 25.11.2005
(51) Int. Cl.: H01M 8/10, H01M 4/96, H01M 4/88

(54) **Electrode for fuel cell, fuel cell comprising the same, and method for preparing the same**
Elektrode für Brennstoffzelle, ein diese Elektrode enthaltendes Brennstoffzellensystem, und deren Herstellungsverfahren
Electrode pour pile à combustible, système de pile à combustible contenant une telle électrode, et sa méthode de production

(30) Priority: 26.11.2004 KR 97952
(43) Date of publication of application: 07.06.2006
(73) Proprietor: Samsung SDI Co., Ltd., Suwon-si Gyeonggi-do (KR)
(72) Inventor: KIM, Hee-Tak Legal & IP Team, Samsung SDI Co.,LTD., Kyeonggi-Do (KR); KWEON, Ho-Jin Legal & IP Team, Samsung SDI Co.,LTD., Kyeonggi-Do (KR); LEE, Jong-Ki Legal & IP Team, Samsung SDI Co., LTD., Kyeonggi-Do (KR)
(74) Representative: Hengelhaupt, Jürgen

(56) References cited:
- US-A- 4 293 396
- US-A1- 2002 061 433
- US-A1- 2002 175 073
- US-A1- 2004 197 638
- RAJESH B ET AL: "Pt-WO3 supported on carbon nanotubes as possible anodes for direct methanol fuel cells" FUEL, IPC SCIENCE AND TECHNOLOGY PRESS, GUILDFORD, GB, vol. 81, no. 17, December 2002 (2002-12), pages 2177-2190, XP004377567 ISSN: 0016-2361

## Description

### FIELD OF THE INVENTION

The present invention relates to an electrode for a fuel cell, a fuel cell including the same, and a method for preparing the same, and more particularly to an electrode which has a large surface area and thus improves electrochemical reaction, a fuel cell including the same, and a method for preparing the same.

### BACKGROUND OF THE INVENTION

A fuel cell is a power generation system for producing electrical energy through an electrochemical redox reaction of an oxidant and a fuel such as hydrogen, or a hydrocarbon-based material such as methanol, ethanol, or natural gas.

A fuel cell can be classified as a phosphoric acid type, a molten carbonate type, a solid oxide type, a polymer electrolyte type, or an alkaline type depending upon the kind of electrolyte used. Although each of these different types of fuel cells effectively operates in accordance with the same basic principles, they may differ from one another in the kind of the fuel, operating temperature, catalyst, and/or electrolyte used.

Recently, polymer electrolyte membrane fuel cells (PEMFCs) have been developed. They have power characteristics that are superior to conventional fuel cells, as well as lower operating temperatures and faster start and response characteristics. Because of this, PEMFCs have a wide range of applications such as for mobile power sources for automobiles, distributed power sources for houses and public buildings, and small electric sources for electronic devices.

A PEMFC is essentially composed of a stack, a reformer, a fuel tank, and a fuel pump. The stack forms a body of the PEMFC, and the fuel pump provides fuel stored in the fuel tank to the reformer. The reformer reforms the fuel to generate hydrogen and supplies the hydrogen to the stack. Fuel stored in the fuel tank is pumped to the reformer using power which can be provided by the PEMFC. Then, the reformer reforms the fuel to generate hydrogen, and the hydrogen and the oxidant are electrochemically oxidized and reduced, respectively in the stack to generate electrical energy.

Alternatively, a fuel cell may be a direct methanol fuel cell (DMFC) in which liquid methanol fuel is directly introduced to the stack. Unlike a PEMFC, a DMFC does not require a reformer.

In the above-mentioned fuel cell system, the stack for generating the electricity has a structure in which several unit cells, each having a membrane electrode assembly (MEA) and a separator (referred to also as a "bipolar plate"), are stacked adjacent one another. The MEA is composed of an anode (referred to also as a "fuel electrode" or "oxidation electrode") and a cathode (referred to also as an "air electrode" or "reduction electrode") that are separated by a polymer electrolyte membrane.

The separators work as passageways for supplying the fuel and the oxidant required for the reaction to the anode and the cathode, respectively, and also work as a conductor for serially connecting the anode and the cathode in the MEA. The electrochemical oxidation reaction of the fuel occurs on the anode, and the electrochemical reduction reaction of an oxidant occurs on the cathode. Due to movement of the electrons generated by the reactions, electricity, heat, and water can be collectively produced.

The anode or cathode typically includes a platinum (Pt) catalyst. However, platinum is a rare and expensive metal and thus is disadvantageous to use in a large amount. In this regard, in order to reduce the amount of platinum used, the platinum is typically supported on carbon.

However, supporting the platinum on the carbon can result in an increased thickness of the catalyst layer. Furthermore, there are limits in the amount of platinum that can be stored on the catalyst layer. Additionally, contact between this catalytic layer and the membrane may not be good, which may further deteriorate the fuel cell performance.

Therefore, it is desirable to develop an MEA for a fuel cell with a reduced amount of catalyst in the catalyst layer while still showing excellent cell performance.

US 2004/197638 A1 discloses the use of a catalytic ink for preparation of a fuel cell electrode comprising carbon nanotubes, catalytic metal, and optionally a carbon powder and an ionomeric resin.

### SUMMARY OF THE INVENTION

In the present invention, an electrode for a fuel cell according to claim 1 including a catalyst having a large surface area and improved reaction efficiency is provided.

In an embodiment of the present invention, an MEA for the fuel cell includes the improved electrode for the fuel cell according to claim 1.

In another embodiment of the present invention, a fuel cell system includes the electrode for the fuel cell according to claim 1.

In the present invention, a method according to claim 19 is provided for fabricating the improved electrode for the fuel cell.

According to the present invention, an electrode for a fuel cell includes an electrode substrate, a microporous layer (MPL) formed on the electrode substrate, wherein a roughness factor of the microporous layer is in the range of 5 to 100, a nano-carbon layer formed on a surface of the microporous layer, and a catalyst being coated on the nano-carbon layer to form a catalyst layer.

According to another aspect of the present invention there is provided a membrane-electrode assembly (MEA) for a fuel cell. The MEA includes a polymer electrolyte membrane and at least two electrodes as described above respectively positioned on both sides of the polymer electrolyte membrane.

According to another aspect of the present invention there is provided a fuel cell system that includes at least one electricity generating unit. The fuel cell system further includes a fuel supplying unit for supplying a fuel including hydrogen to the electricity generating unit and an oxidant supplying unit for supplying an oxidant to the electricity generating unit. The electricity generating unit includes a plurality of MEAs as described above.

According to the present invention there is provided a method of preparing an electrode for a fuel cell according to claim 19. The method includes providing an electrode substrate, forming a microporous layer on a surface of the electrode substrate; providing a first catalyst for synthesizing nano-carbon on a surface of the microporous layer; heating the first catalyst locally while exposing the first catalyst to a reactive gas including carbon to grow a nano-carbon layer on the surface of the microporous layer; and coating a second catalyst on the nano-carbon layer to form a catalyst layer.

### BRIEF DESCRIPTION OF THE DRAWINGS

FIG. 1A is a schematic cross-sectional view showing an electrode substrate before it has been coated with catalyst;

FIG. 1B is a schematic cross-sectional view showing an electrode for a fuel cell with a catalyst coated thereon in accordance with an embodiment of the present invention;

FIG. 2 is a schematic cross-sectional view showing an electrode for a fuel cell in accordance with another embodiment of the present invention;

FIG. 3 is a schematic cross-sectional view depicting an electrode-membrane assembly for a fuel cell in accordance with an embodiment of the present invention;

FIG. 4 is an exploded perspective view of a stack which includes an electrode of an embodiment of the present invention;

FIG. 5 is a schematic view showing a fuel cell system according to the present invention; and

FIG. 6 is a graph showing current density and voltage of fuel cells according to Example 1 and Comparative Examples 1 and 2.

### DETAILED DESCRIPTION

Typically, expensive noble metals are used as metal catalysts for an MEA of a fuel cell. Among the noble metals, platinum is used widely. Because platinum is a rare and expensive metal, it is desirable to reduce the quantity of the metal catalyst while maintaining the performance of the fuel cell.

A method for reducing the amount of the metal catalyst is to deposit the metal catalyst on a substrate to thereby form a catalyst layer. However, the surface area of the catalyst layer depends on the surface area of the substrate on which the catalyst is deposited. If the catalyst layer has a small surface area, the output characteristic of a fuel cell is degraded. Thus, an embodiment of the present invention provides a system and method to enlarge the surface area of the substrate where the catalyst is deposited.

In an electrode according to an embodiment of the present invention, the amount of metal catalyst can be significantly reduced, while the surface area of the metal catalyst can be increased by maximizing the surface area of the electrode substrate and coating the catalyst thereon.

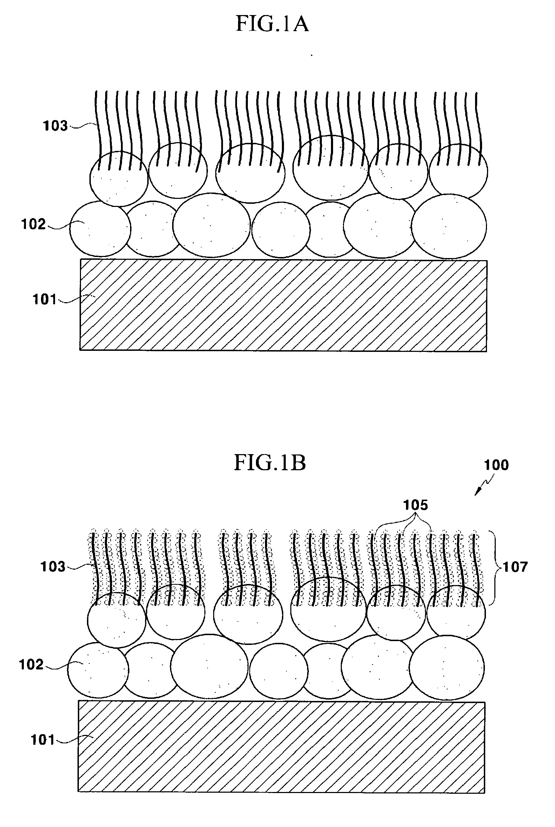

FIG. 1A is a schematic cross-sectional view showing an electrode substrate with a maximized specific surface area, and FIG. 1B is a schematic cross-sectional view showing an electrode for a fuel cell that has a catalyst coated on the surface of the electrode substrate in accordance with an embodiment of the present invention.

Referring to FIGs. 1A and 1B, an electrode 100 for a fuel cell includes an electrode substrate 101, a microporous layer 102 formed on the surface of the electrode substrate 101, and a catalyst layer 107 including nano-carbon 103 formed on the surface of the microporous layer 102 and catalyst 105 coated on the surface of the nano-carbon 103.

The electrode substrate 101 supports the electrode 100, and provides a path for transferring the fuel and oxidant to the catalyst 105. In one embodiment, the electrode substrate 101 is formed from a material such as carbon paper, carbon cloth, or carbon felt. Because the electrode substrate 101 also diffuses reactants to the catalyst layer 107, it can be referred to as a diffusion layer.

In one embodiment, the diffusion layer of the electrode substrate 101 has a preferred thickness between about 10 µm and 1000 µm, and more preferably, the thickness is between about 10 µm and 700 µm. When the diffusion layer has a thickness of less than 10 µm, it cannot serve as a supporter. When the diffusion layer has a thickness of more than 1000 µm, the fuel and oxidants cannot be supplied smoothly.

As shown, the electrode 100 further includes a microporous layer 102 for improving diffusion of reactants. The microporous layer 102 has a roughness factor in the range of 5 to 100. The roughness factor is a value obtained by dividing the surface area of the microporous layer 102 by the geometric area of the microporous layer 102. When the roughness factor is less than 5, the amount of nano-carbon 105 formed on the microporous layer 102 is too small to perform its required function, and it is difficult to form a roughness of more than 100.

The microporous layer 102 supplies reactants to the catalyst layer 107, and transfers electrons which are formed on the catalyst layer 107 to a polymer membrane of the fuel cell. In one embodiment, the microporous layer 102 includes a conductive material such as carbon powder, graphite, fullerene (C60), carbon black, acetylene black, activated carbon, nano-carbon, or combinations thereof. The nano-carbon may include a material such as carbon nanotube, carbon nanofiber, carbon nanowire, carbon nanohorn, carbon nanoring, or combinations thereof.

In one embodiment, the microporous layer 102 has a preferred thickness between about 1 µm and 100 µm, and more preferred, between about 1 µm and 80 µm. When the microporous layer has a thickness of less than 1 µm, the fuels or oxidants cannot be diffused effectively. When it has a thickness of more than 100 µm, the fuels or oxidants cannot be supplied smoothly.

The catalyst layer 107 is formed on the surface of the microporous layer 102, and includes nano-carbon 103 and catalyst 105 which are coated on the surface of the nano-carbon 103.

The nano-carbon 103 may be in the form of carbon nanotube (CNT), carbon nanofiber, carbon nanowire, carbon nanohorn, carbon nanoring or combinations thereof.

In one embodiment, the nano-carbon 103 is grown in a direction perpendicular to the surface of the microporous layer 102, and directly on the surface of the microporous layer 102.

In one embodiment, the nano-carbon 103 has a diameter between about 1 and 500 nm and a length between about 50 and 5000 nm. Typically, the smaller the diameter for the nano-carbon 103, the better it is. However, fabricating nano-carbon with a diameter smaller than 1nm is difficult. When the diameter is larger than 500 nm, the effect of increasing the surface area is small. Also, when the nano-carbon 103 has a length shorter than 50 nm, the surface area of the nano-carbon 103 is low, which makes it hard to supply fuel. When the nano-carbon 103 has a length longer than 500 nm, the reactant diffusion is not smooth, and coating the catalyst 105 on the entire surface of the nano-carbon 103 is difficult.

In one embodiment, the catalyst layer 107 has a thickness between about 0.05 µm and 10 µm. When the catalyst layer 107 has a thickness of less than 0.05 µm, the surface area does not increase sufficiently. When it has a thickness of more than 10 µm, the surface increasing effect is saturated and unfavorably induces an increase in the thickness of the electrode 100.

In one embodiment, the amount of catalyst 105 included in the catalyst layer 107 is preferably between about 0.001 and 0.5 mg/cm², more preferably between about 0.001 and 0.2 mg/cm², and even more preferably between about 0.01 and 0.05 mg/cm². When the amount of catalyst 105 included in the catalyst layer 107 is less than 0.001mg/cm², the fuel cell does not have sufficient efficiency. When the catalyst content exceeds 0.5 mg/cm², the utilization of the catalyst 105 can be degraded, and porosity of the catalyst layer 107 decreases, resulting in inhibition of reactant diffusion.

A catalyst layer in a conventional fuel cell is formed by coating a slurry including a catalyst, a binder, and a solvent on an electrode substrate using a wet coating technology. In order to obtain a desired efficiency for the conventional fuel cell, the content of the catalyst needs to be more than 0.5 mg/cm² per unit area. In a fuel cell of the present invention, the catalyst layer is formed on a nano-carbon surface and thus sufficient efficiency can be obtained while the content of the catalyst per unit area is reduced as compared with a conventional fuel cell.

In one embodiment of a fuel cell of the present invention, the specific surface area of the catalyst included in the catalyst layer 107 is preferably between about 10 and 500 m²/g, or more preferably between about 50 and 500 m²/g. Since the oxidation/reduction reaction of the fuel cell occurs on the surface of the catalyst, the fuel cell has excellent efficiency as it has a large specific surface area per unit weight. However, when the specific surface area per unit weight is smaller than 10 m²/g, the fuel cell has poor efficiency. When the specific surface area per unit weight is more than 500 m²/g, it is difficult to fabricate the fuel cell.

In one embodiment and referring now back to FIG. 1B, the catalyst layer 107 is formed by forming nano-carbon 103 on the microporous layer 102 and coating the metal catalyst 105 on the surface of the nano-carbon 103. Suitable catalysts 105 include platinum, ruthenium, osmium, platinum-transition metal alloys, and combinations thereof. The transition metal can include Ru, Os, Co, Pd, Ga, Ti, V, Cr, Mn, Fe, Co, Ni, Cu, or Zn.

The catalyst 105 is coated on the surface of the nano-carbon 103 using any one of a number of methods that include sputtering, physical vapor deposition (PVD), plasma enhanced chemical vapor deposition (PECVD), thermal chemical vapor deposition, electron beam evaporation, vacuum thermal evaporation, laser ablation, and thermal evaporation.

Hereinafter, a method for a preparing an electrode for a fuel cell in accordance with a first embodiment of the present invention is described in more detail.

Referring to FIGs.1A and 1B, the microporous layer 102 is first formed on a surface of the electrode substrate 101. The electrode substrate 101 should be treated with a water-repellent agent such as polytetrafluoroethylene (PTFE). The microporous layer 102 is prepared by coating a composition including conductive materials, a binder resin, and a solvent on the electrode substrate 101. Suitable conductive material includes carbon, graphite, fullerene (C60), carbon black, acetylene black, activated carbon, and nano-carbon, such as carbon nanotube, carbon nanofiber, carbon nanowire, carbon nanohorn, carbon nanoring. The binder resin may be formed from materials such as polytetrafluoroethylene (PTFE), polyvinylidene fluoride, a copolymer of polyvinylidene fluoride and hexafluoropropylene (PVdF-HFP), polyvinylalcohol, or cellulose acetate. Suitable solvents include alcohols such as ethanol, isopropyl alcohol, ethyl alcohol, n-propyl alcohol, and butyl alcohol, water, dimethyl acetamide (DMAc), dimethylformamide, dimethylsulfoxide (DMSO), N-methylpyrrolidone, and tetrahydrofuran. The coating may be performed using a method such as screen printing, spray printing, coating using a doctor blade, gravure coating, dip coating, a silk screen method, or painting according to viscosity of the coating composition, but is not limited thereto.

In order to grow the nano-carbon 103, a first catalyst for synthesizing the nano-carbon 103 is introduced on the surface of the microporous layer 102. Examples of the first catalyst include Fe, Ni, Co, Y, Pd, Pt, Au, Pd, Ga, Ti, V, Cr, Mn, Cu, Ta, W, Mo, Al, and alloys thereof, and metal-containing carbides, borides, oxides, nitrides, sulfides, sulfates, and nitrates. Preferred first catalysts include Fe, Ni, alloys thereof, and metal-containing carbides, borides, oxides, nitrides, sulfides, sulfates, and nitrates.

In one embodiment, the first catalyst may be introduced by methods such as electrophoresis, or thermal spraying, and is dispersed uniformly on the surface of the microporous layer 102.

The substrate 101 on which nano-carbon 103 is grown should have a large surface area so that the nano-carbon 103 may provide a large surface area. Substrates such as carbon paper, carbon cloth, and carbon felt have a non-uniform surface, and thus cannot increase the surface of the nano-carbon 103 sufficiently. Therefore, in an embodiment of the present invention, in order to obtain a large surface for the nano-carbon 103, the microporous layer 102 is first formed on the surface of the electrode substrate 101.

After the first catalyst for synthesizing the nano-carbon 103 is introduced on the surface of the microporous layer 102, the first catalyst is heated locally while providing a reactive gas including a carbon source gas on the first catalyst, thereby synthesizing the nano-carbon 103 on the surface of the microporous layer 102.

Examples of the carbon source gas include hydrocarbon gases, such as ethylene, acetylene, and methane, carbon monoxide and carbon dioxide. The carbon source gas can also be introduced along with an inert gas such as nitrogen or argon.

The local heating process can be performed by methods such as microwave irradiation, electromagnetic induced heating, laser heating, and high frequency (RF) heating.

The synthesis of the nano-carbon may also be performed by using an electrode substrate upon which a microporous layer is formed and a synthesizing apparatus including a reactor where the nano-carbon is synthesized by a first catalyst; a supply of reactive gas; and a local heating unit for heating the first catalyst.

Direct synthesis of the nano-carbon on the substrate using deposition methods should be performed at a high temperature of more than about 600°C. However, during such a high temperature deposition, the polymer used for the water-repellent treatment of the electrode substrate or the binder resin for formation of the microporous layer may be decomposed. In one embodiment of the present invention, the nano-carbon can be grown at room temperature (25°C) or another relatively low temperature by heating the first catalyst locally, thereby reducing polymer decomposition.

A catalyst layer is formed by coating a second catalyst on the nano-carbon. Suitable materials for the second catalyst include platinum, ruthenium, osmium, and platinum-transition metal alloys, where suitable transition metals include Ru, Os, Co, Pd, Ga, Ti, V, Cr, Mn, Fe, Co, Ni, Cu, and Zn. Suitable deposition methods include sputtering, physical vapor deposition (PVD), plasma enhanced chemical vapor deposition (PECVD), thermal chemical vapor deposition, electron beam evaporation, vacuum thermal evaporation, laser ablation, and thermal evaporation. However, the deposition is not limited to the above-listed methods. If necessary, a combination of the above-listed methods can be used.

After coating the second catalyst, the first catalyst should be removed in order to improve the efficiency of the second catalyst. The first catalyst can be removed by using a process such as an acid treatment. For the acid treatment, an acid such as nitric acid, sulfuric acid, hydrochloric acid, or acetic acid may be used.

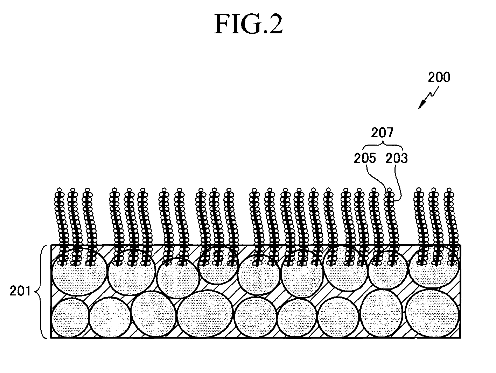

According to another embodiment, the electrode substrate and the microporous layer may be combined. Referring to FIG. 2, the electrode 200 includes an electrode substrate 201 including carbon particles dispersed therein and a catalyst layer 207. The catalyst layer 207 includes nano-carbon 203 formed on a surface of the electrode substrate 201, and a catalyst 205 coated on a surface of the nano-carbon 203. The nano-carbon 203 and the catalyst 205 are the same as described above.

According to another embodiment of the invention, an MEA is provided that includes the above described electrode. The MEA is prepared by positioning one of the above described electrodes on each side of the polymer electrolyte membrane.

According to still another embodiment of the invention, the MEA can be prepared by coating nano-carbon on the first and second side surfaces of the polymer membrane, coating a catalyst thereon, and then positioning electrode substrates on the first and second side surfaces of the coated polymer membrane.

The coating of the nano-carbon and the catalyst on the MEA can be performed in substantially the same way as described above in preparing the electrode for a fuel cell. That is, in order to grow the nano-carbon on the surface of the polymer membrane, a first catalyst for synthesizing the nano-carbon is introduced. Examples of the first catalyst include Fe, Ni, Co, Y, Pd, Pt, Au, Pd, Ga, Ti, V, Cr, Mn, Cu, Ta, W, Mo, Al, alloys thereof, and metal-containing carbides, borides, oxides, nitrides, sulfides, sulfates, and nitrates. Preferred first catalysts include Fe, Ni, alloys thereof, and metal-containing carbides, borides, oxides, nitrides, sulfides, sulfates, and nitrates.

In one embodiment, the first catalyst may be introduced by methods that include electrophoresis, thermal spraying and sputtering, and is dispersed uniformly on the surface of the polymer electrolyte membrane.

After the first catalyst for synthesizing nano-carbon is introduced on the surface of the polymer electrolyte membrane, the first catalyst is heated locally while providing a reactive gas including a carbon source gas on the first catalyst. By this method, the nano-carbon is directly synthesized on the surface of the polymer electrolyte membrane.

Examples of the carbon source gas include hydrocarbon gases such as ethylene, acetylene, and methane, carbon monoxide and carbon dioxide. The carbon source gas may also be introduced along with an inert gas such as nitrogen or argon.

The local heating process may be performed by microwave irradiation, electromagnetic induced heating, laser heating, or high frequency (RF) heating, but is not limited thereto.

The synthesis of the nano-carbon may also be performed by using a polymer electrolyte membrane and a synthesizing apparatus including a reactor where the nano-carbon is synthesized by a first catalyst; a supply of reactive gas; and a local heating unit for heating the first catalyst.

Direct synthesis of the nano-carbon on the substrate using deposition should be performed at a high temperature of more than 600°C. However, at such a high temperature the polymer electrolyte membrane may be decomposed. In one embodiment of the present invention, the nano-carbon may be grown at room temperature (25°C) or another relatively low temperature by heating the first catalyst locally, thereby reducing decomposition of the polymer electrolyte membrane.

A catalyst layer is formed by coating a second catalyst on the nano-carbon formed on the surface of the polymer electrolyte membrane. Suitable choices for the second catalyst include platinum, ruthenium, osmium, and platinum-transition metals where suitable transition metals include Ru, Os, Co, Pd, Ga, Ti, V, Cr, Mn, Fe, Co, Ni, Cu, and Zn. The second catalyst may be coated using a deposition method selected from sputtering, physical vapor deposition (PVD), plasma enhanced chemical vapor deposition (PECVD), thermal chemical vapor deposition, electron beam evaporation, vacuum thermal evaporation, laser ablation, and thermal evaporation. However, the deposition is not limited to the above-listed methods. If necessary, a combination of the above-listed methods can be used.

After coating the second catalyst, the first catalyst should be removed in order to improve efficiency of the second catalyst. The first catalyst may be removed using acid treatment. Examples of acids used for the acid treatment include nitric acid, sulfuric acid, hydrochloric acid, and acetic acid.

The present invention also provides a fuel cell system including an MEA described above.

According to still another embodiment of the invention, the fuel system includes at least one electricity generating unit, a fuel supplying unit, and an oxidant supplying unit. The electricity generating unit includes an MEA including a polymer electrolyte membrane and the above described electrodes according to the first embodiment respectively positioned on both sides of the polymer electrolyte membrane, and separators respectively positioned on both sides of the MEA. The electricity generating unit generates electricity through an electrochemical reaction of hydrogen and an oxidant. The fuel supplying unit is for supplying hydrogen or a fuel including hydrogen to the electricity generating unit, and the oxidant supplying unit is for supplying an oxidant to the electricity generating unit.

According to still another embodiment of the invention, a fuel cell system includes at least one electricity generating unit, a fuel supplying unit, and an oxidant supplying unit. The electricity generating unit includes an MEA including a polymer electrolyte membrane, nano-carbon formed on the first and second side surfaces of the polymer electrolyte membrane, catalyst coated on the surface of the nano-carbon to form a catalyst layer, and electrode substrates positioned on the first and second side surfaces of the polymer electrolyte membrane. Separators are positioned on both sides of the MEA. The electricity generating unit generates electricity through an electrochemical reaction between hydrogen and an oxidant. The fuel supplying unit is for supplying hydrogen or a fuel including hydrogen to the electricity generating unit, and the oxidant supplying unit is for supplying an oxidant to the electricity generating unit.

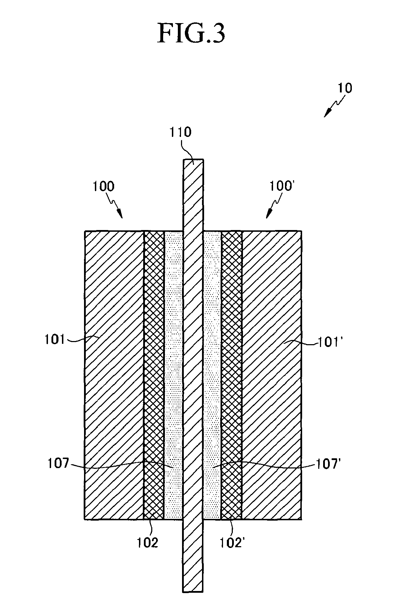

FIG. 3 is a schematic cross-sectional view illustrating an MEA including an electrode for a fuel cell in accordance with the first embodiment of the present invention. Referring to FIG. 3, an MEA 10 includes a polymer electrolyte membrane 110 and an anode 100 and cathode 100' which are positioned on both surfaces of the polymer electrolyte membrane 110. At the anode 100, an oxidation reaction of fuel occurs to generate protons, H⁺, and electrons, e⁻. The polymer electrolyte membrane 110 transmits the generated protons to the cathode 100'. The transmitted protons on the cathode 100' are electrochemically reacted with an oxidant supplied on the cathode 100' to generate water.

The polymer electrolyte membrane 110 is made of a proton-conducting polymer. Exemplary materials for the polymer electrolyte membrane 110 include perfluoro-based polymers, benzimidazole-based polymers, polyimide-based polymers, polyetherimide-based polymers, polyphenylene sulfide-based polymers, polysulfone-based polymers, polyethersulfone-based polymers, polyetherketone-based polymers, polyether-etherketone-based polymers, and polyphenylquinoxaline-based polymers. Suitable proton-conducting polymers include poly(perfluorosulfonic acid), poly(perfluorocarboxylic acid), co-polymers of tetrafluoroethylene and fluorovinylether containing sulfonic acid groups, defluorinated polyetherketone sulfides, aryl ketones, poly(2,2'-(m-phenylene)-5,5'-bibenzimidazole), and poly(2,5-benzimidazole).

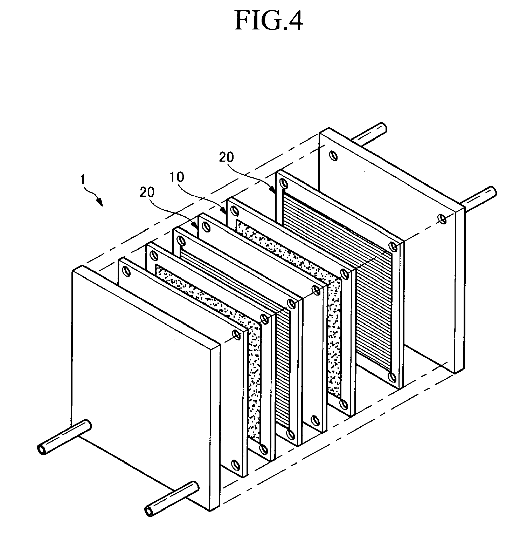

Separators are positioned on both sides of the MEA 10 to form an electricity generating unit. Through the separators, fuels and oxidants are supplied to the catalyst layers 107, 107' via the microporous layers 102, 102' and electricity is generated through the electrochemical reaction of fuels and oxidants. In general, at least two electricity generating units may be stacked to form a stack. FIG. 4 is a schematic exploded perspective view illustrating a stack. Referring to FIG. 4, the stack 1 includes an MEA 10 with separators 20 positioned on both sides of the MEA 10.

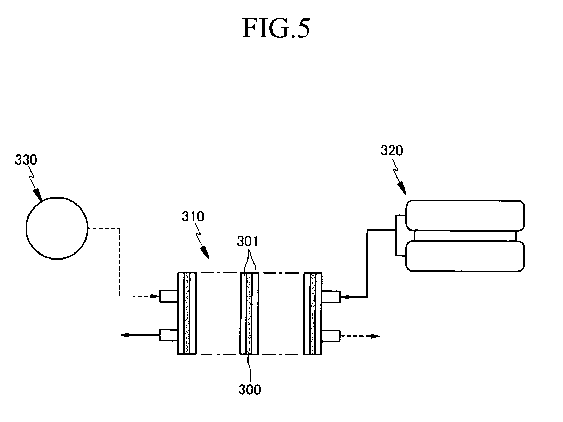

FIG. 5 shows the schematic structure of a fuel cell system of the present invention. Referring to FIG. 5, a fuel cell system includes an electricity generating unit 310, a fuel supplying unit 320, and an oxidant supplying unit 330. The electricity generating unit 310 includes a membrane-electrode assembly 300, and separators 301 to be positioned at both sides of the membrane-electrode assembly 300.

The fuel and oxidant are provided to the electricity generating unit through pumps or in a diffusion manner.

The fuel cell system of the present invention may be a phosphoric acid type, a polymer electrolyte type, or an alkaline type. It may further be a Polymer Electrolyte Membrane Fuel Cell (PEMFC) system or a Direct Methanol Fuel Cell (DMFC) system.

The following examples illustrate the present invention in further detail. However, it is understood that the present invention is not limited by these examples.

### Example 1

3g of carbon black, 0.2g of polytetrafluoroethylene (PTFE), and 20g of water as a solvent were mixed to prepare a composition. The composition was coated on a 200 µm-thick carbon cloth that was treated with PTFE to form a microporous layer. On the surface of the microporous layer, Fe as a first catalyst was dispersed in an amount of 0.02 mg/cm² by sputtering. The Fe-dispersed carbon cloth was placed on a quartz boat of a reactor mounted with a microwave generator. Acetylene gas as a carbon source and argon gas were introduced into the reactor at room temperature for 20 minutes to grow carbon nanotubes having a diameter of about 10 nm and a length of about 2000 nm. The microwaves were controlled to irradiate the Fe selectively to heat it locally.

On the surface of the carbon nanotubes, Pt was deposited to fabricate an electrode. The electrode was dipped in 20wt% of nitric acid for 2 hours to remove the remaining Fe. The fabricated electrode had a Pt content per unit area of 0.05 mg/cm² and a surface area of 35 m²/g.

Subsequently, an MEA was fabricated by positioning and joining the electrodes for a fuel cell on both sides of a poly(perfluorosulfonic acid) membrane of Nafion^{®} 112 material produced by the DuPont Company. A stack was fabricated by positioning separators on both sides of MEAs and stacking them. A fuel cell was fabricated by connecting a fuel supply unit including a fuel tank, a fuel pump, and an oxygen pump to the stack.

### Example 2

A fuel cell was fabricated by the same method as in Example 1, except that Ni was used as a first catalyst.

### Example 3

A fuel cell was fabricated by the same method as in Example 1, except that carbon nanofibers were grown as the nano-carbon instead of the carbon nanotubes.

### Example 4

A fuel cell was fabricated by the same method as in Example 1, except that carbon nanowires were grown as the nano-carbon instead of the carbon nanotubes.

### Example 5

0.5g of carbon black, 0.5g of polytetrafluoroethylene (PTFE), and 49g of water as a solvent were mixed to prepare a composition. The composition was coated on a 200 µm-thick carbon cloth that was treated with PTFE to fabricate an electrode substrate in which the carbon black was dispersed. On the surface of the electrode substrate, Fe as a first catalyst was dispersed in an amount of 0.02 mg/cm² by sputtering. The Fe-dispersed carbon cloth was placed on a quartz boat of a reactor mounted with a microwave generator. Acetylene gas as a carbon source and argon gas were introduced into the reactor at room temperature for 20 minutes to grow carbon nanotubes having a diameter of about 10 nm and a length of about 2000 nm. The microwaves were controlled to irradiate the Fe selectively to heat it locally.

On the surface of the carbon nanotubes, Pt was deposited to fabricate an electrode. The electrode was dipped in 20wt% of nitric acid for 2 hours to remove the remaining Fe. The fabricated electrode had a Pt content per unit area of 0.05 mg/cm² and a surface area of 35 m²/g.

Subsequently, an MEA was fabricated by positioning and joining the electrodes for a fuel cell on both sides of a poly (perfluorosulfonic acid) membrane of Nafion^{®} 112 material produced by the DuPont Company. A stack was fabricated by positioning separators on both sides of MEAs and stacking them. A fuel cell was fabricated by connecting a fuel supply unit including a fuel tank, a fuel pump, and an oxygen pump to the stack.

### Comparative Example 1

A fuel cell was fabricated by the same method as in Example 1, except that the electrodes were fabricated by sputtering platinum directly on the surface of an approximately 200 µm-thick carbon cloth.

### Comparative Example 2

A fuel cell was fabricated by the same method as in Example 1, except that the electrodes were fabricated by growing the carbon nanotubes directly on the surface of an approximately 200 µm-thick carbon cloth and sputtering platinum on the surface of the carbon nanotubes without first forming a microporous layer.

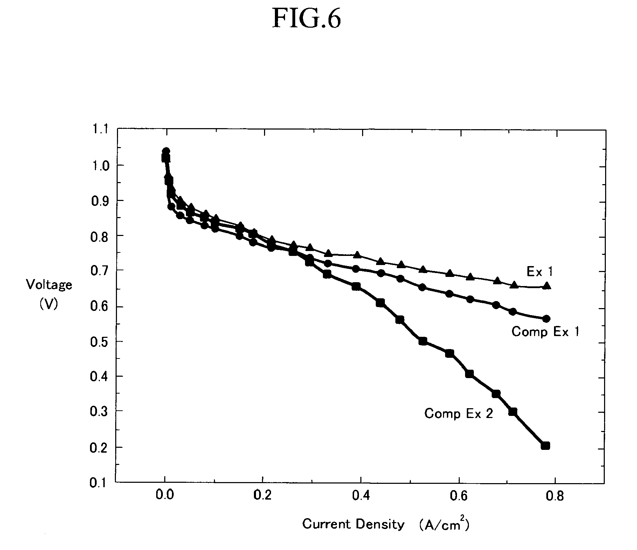

With respect to the fuel cells fabricated in accordance with the examples and comparative examples, about 50% humidified air and hydrogen were respectively supplied to the cathode and the anode, without back pressure, and the fuel cells were operated at about 60°C. The voltage and current density of the fuel cells of Example 1 and Comparative Examples 1 and 2 were measured and the results are given in FIG. 6. As can be seen from the measurement results, the fuel cell of Example 1, including the electrode where the nano-carbon was grown directly on a microporous layer and a catalyst was coated thereon, had a significantly better current density at a certain voltage compared with the fuel cells of Comparative Examples 1 and 2.

In view of the foregoing and according to an embodiment of the present invention, an electrode for a fuel cell has a large surface area such that a small quantity of catalyst can be used to provide high electrode reactivity and improved fuel cell performance.

## Claims

1. An electrode (100) for a fuel cell comprising:
an electrode substrate (101);
a microporous layer (102) on the electrode substrate (101), wherein a roughness factor of the microporous layer (102) is in the range of 5 to 100;
a nano-carbon (103,203) layer on a surface of the microporous layer (102); and
a catalyst (105) being coated on the nano-carbon layer (103) to form a catalyst layer (107).

2. The electrode (100) for a fuel cell of claim 1, wherein the electrode substrate (101) comprises a material selected from the group consisting of carbon paper, carbon cloth, and carbon felt.

3. The electrode (100) for a fuel cell of claim 1, wherein the electrode substrate (101) has a thickness between 10µm and 1000µm.

4. The electrode (100) for a fuel cell of claim 1, wherein the microporous layer (102) has a thickness between 1µm and 100µm.

5. The electrode (100) for a fuel cell of claim 1, wherein the microporous layer (102) comprises a material selected from the group consisting of carbon powder, graphite, fullerene (C60), carbon black, acetylene black, activated carbon, nano-carbon, carbon nanotube, carbon nanofiber, carbon nanowire, carbon nanohorn, and carbon nanoring.

6. The electrode (100) for a fuel cell of claim 1, wherein the catalyst layer (107) has a thickness between 0.05µm and 10µm.

7. The electrode (100) for a fuel cell of claim 1, wherein the nano-carbon is selected from the group consisting of carbon nanotubes (CNT), carbon nanofibers, carbon nanowires, carbon nanohorns, and carbon nanorings.

8. The electrode (100) for a fuel cell of claim 1, wherein the nano-carbon is grown directly on a surface of the microporous layer (102).

9. The electrode (100) for a fuel cell of claim 1, wherein the nano-carbon has a diameter between 1 and 500 nm.

10. The electrode (100) for a fuel cell of claim 1, wherein the catalyst (105) is provided in an amount between 0.001 and 0.5 mg/cm².

11. The electrode (100) for a fuel cell of claim 10, wherein the catalyst (105) is provided in an amount between 0.01 and 0.05 mg/cm².

12. The electrode (100) for a fuel cell of claim 1, wherein the catalyst layer (107) has a specific surface area between 10 and 500 m²/g.

13. The electrode (100) for a fuel cell of claim 1, wherein the catalyst (105) is a material selected from the group consisting of platinum, ruthenium, osmium, platinum-transition metal alloys, and combinations thereof.

14. The electrode (100) for a fuel cell of claim 13, wherein the transition metal is selected from the group consisting of Ru, Os, Co, Pd, Ga, Ti, V, Cr, Mn, Fe, Co, Ni, Cu, Zn, and combinations thereof.

15. A membrane-electrode assembly (10) for a fuel cell, comprising a polymer electrolyte membrane (110); and at least two electrodes (100) according to any of the claims 1 to 14 respectively positioned on both sides of the polymer electrolyte membrane (110).

16. The membrane-electrode assembly (10) for a fuel cell of claim 15, wherein the polymer electrolyte membrane (110) is a proton-conducting polymer selected from the group consisting of perfluoro-based polymers, benzimidazole-based polymers, polyimide-based polymers, polyetherimide-based polymers, polyphenylene sulfide-based polymers, polysulfone-based polymers, polyethersulfone-based polymers, polyetherketone-based polymers, polyether-etherketone-based polymers, and polyphenylquinoxaline-based polymers.

17. The membrane-electrode assembly (10) for a fuel cell of claim 15, wherein the polymer electrolyte membrane (110) is a proton-conducting polymer selected from the group consisting of poly(perfluorosulfonic acid), poly(perfluorocarboxylic acid), co-polymers of tetrafluoroethylene and fluorovinylether containing sulfonic acid groups, defluorinated polyetherketone sulfides, aryl ketones, poly(2,2'-(m-phenylene)-5,5'-bibenzimidazole), and poly(2,5-benzimidazole).

18. A fuel cell system comprising an electricity generating unit (310), a fuel supplying unit (320) for supplying a fuel including hydrogen to the electricity generating unit (310); and an oxidant supplying unit (330) for supplying an oxidant to the electricity generating unit (310), wherein the electricity generating unit (310) comprises a plurality of membrane electrode assemblies (300) according to any of the claims 15 to 17 and separators (301).

19. A method of preparing an electrode (100) for a fuel cell, the method comprising:
providing an electrode substrate (101);
forming a microporous layer (102) on the electrode substrate (101);
providing a first catalyst for synthesizing nano-carbon on the microporous layer (102);
heating the first catalyst locally while exposing the first catalyst to a reactive gas including carbon to grow a nano-carbon layer (103) on the microporous layer (102); and
coating a second catalyst (105) on the nano-carbon layer (103) to form a catalyst layer (107).

20. The method of claim 19, wherein the electrode substrate (101) is selected from the group consisting of carbon paper, carbon cloth, and carbon felt.

21. The method of claim 19, wherein the electrode substrate (101) has a thickness between 10µm and 1000µm.

22. The method of claim 19, wherein the microporous layer (102) has a thickness between 1µm and 100µm.

23. The method of claim 19, wherein the microporous layer (102) comprises a material selected from the group consisting of carbon powder, graphite, fullerene (C60), carbon black, acetylene black, activated carbon, nano-carbon, carbon nanotube, carbon nanofiber, carbon nanowire, carbon nanohorn, and carbon nanoring.

24. The method of claim 19, wherein the first catalyst is selected from the group consisting of Fe, Ni, Co, Y, Pd, Pt, Au, Pd, Ga, Ti, V, Cr, Mn, Cu, Ta, W, Mo, Al, alloys thereof, and metal-containing carbides, borides, oxides, nitrides, sulfides, sulfates, and nitrates.

25. The method of claim 19, wherein the first catalyst is introduced by a method selected from electrophoresis, thermal spray method, and sputtering.

26. The method of claim 19, wherein the reactive gas is selected from the group consisting of hydrocarbon gases, carbon monoxide, and carbon dioxide.

27. The method of claim 19, wherein the local heating of the catalyst is performed by a method selected from microwave irradiation, electromagnetic induced heating, laser heating, and high frequency (RF) heating.

28. The method of claim 19, wherein the catalyst layer (107) is formed to a thickness between 0.05µm and 10µm.

29. The method of claim 19, wherein the nano-carbon of the nano-carbon layer (103) is selected from the group consisting of carbon nanotubes (CNT), carbon nanofibers, carbon nanowires, carbon nanohorns, and carbon nanorings.

30. The method of claim 19, wherein the nano-carbon of the nano-carbon layer (103) is grown in a direction perpendicular to the microporous layer (102).

31. The method of claim 19, wherein the nano-carbon has a diameter between 1 and 500 nm.

32. The method of claim 19, wherein the catalyst layer (107) comprises a catalyst (105) provided in an amount between 0.001 and 0.5 mg/cm².

33. The method of claim 19, wherein the catalyst layer (107) has a specific surface area between 10 and 500 m²/g.

34. The method of claim 19, wherein the catalyst layer (107) is formed by depositing a metal catalyst (105) on the nano-carbon layer (103).

35. The method of claim 34, wherein the metal catalyst (105) is deposited using a method selected from sputtering, physical vapor deposition (PVD), plasma enhanced chemical vapor deposition (PECVD), thermal chemical vapor deposition, electron beam evaporation, vacuum thermal evaporation, laser ablation, and thermal evaporation.

36. The method of claim 34, further comprising removing the first catalyst from the catalyst layer (107).

37. The method of claim 36, wherein the first catalyst is removed by acid treatment.

## Patentansprüche

1. Eine Elektrode (100) für eine Brennstoffzelle, umfassend:
ein Elektrodensubstrat (101);
eine mikroporöse Schicht (102) auf dem Elektrodensubstrat (101), wobei ein Rauigkeitsfaktor der mikroporösen Schicht (102) zwischen 5 und 100 liegt;
eine Nano-Kohlenstoff-Schicht (103, 203) auf einer Oberfläche der mikroporösen Schicht (102); und
einen zum Ausbilden einer Katalysatorschicht (107) auf der Nano-Kohlenstoff-Schicht (103) aufgetragenen Katalysator (105).

2. Die Elektrode (100) für eine Brennstoffzelle nach Anspruch 1, wobei das Elektrodensubstrat (101) ein aus der aus Kohlepapier, Kohlenstoffgewebe und Kohlenstofffilz bestehenden Gruppe ausgewähltes Material umfasst.

3. Die Elektrode (100) für eine Brennstoffzelle nach Anspruch 1, wobei das Elektrodensubstrat (101) eine Stärke von 10µm bis 1000µm aufweist.

4. Die Elektrode (100) für eine Brennstoffzelle nach Anspruch 1, wobei die mikroporöse Schicht (102) eine Stärke von 1 µm bis 100µm aufweist.

5. Die Elektrode (100) für eine Brennstoffzelle nach Anspruch 1, wobei die mikroporöse Schicht (102) ein aus der aus Kohlenstoffpulver, Graphit, Fulleren (C60), Industrieruß, Acetylenruß, Aktivkohle, Nano-Kohlenstoff, Kohlenstoff-Nanoröhre, Kohlenstoff-Nanofaser, Kohlenstoff-Nanodraht, Kohlenstoff-Nanohom und Kohlenstoff-Nanoring bestehenden Gruppe ausgewähltes Material umfasst.

6. Die Elektrode (100) für eine Brennstoffzelle nach Anspruch 1, wobei die Katalysatorschicht (107) eine Stärke von 0,05µm bis 10µm aufweist.

7. Die Elektrode (100) für eine Brennstoffzelle nach Anspruch 1, wobei der Nano-Kohlenstoff aus der aus Kohlenstoff-Nanoröhren (CNT), Kohlenstoff-Nanofasem, Kohlenstoff Nanodrähten, Kohlenstoff-Nanohörnern und Kohlenstoff-Nanoringen bestehenden Gruppe ausgewählt ist.

8. Die Elektrode (100) für eine Brennstoffzelle nach Anspruch 1, wobei der Nano-Kohlenstoff direkt auf einer Oberfläche der mikroporösen Schicht (102) gezüchtet ist.

9. Die Elektrode (100) für eine Brennstoffzelle nach Anspruch 1, wobei der Nano-Kohlenstoff einen Durchmesser von 1 bis 500 nm aufweist.

10. Die Elektrode (100) für eine Brennstoffzelle nach Anspruch 1, wobei der Katalysator (105) in einer Menge zwischen 0,001 und 0,5 mg/cm² bereitgestellt ist.

11. Die Elektrode (100) für eine Brennstoffzelle nach Anspruch 10, wobei der Katalysator (105) in einer Menge zwischen 0,01 und 0,05 mg/cm² bereitgestellt ist.

12. Die Elektrode (100) für eine Brennstoffzelle nach Anspruch 1, wobei die Katalysatorschicht (107) eine spezifische Oberfläche von 10 bis 500 m²/g aufweist.

13. Die Elektrode (100) für eine Brennstoffzelle nach Anspruch 1, wobei der Katalysator (105) ein aus der aus Platin, Ruthenium, Osmium, Platin-Übergangsmetalllegierungen und Kombinationen derselben bestehenden Gruppe ausgewähltes Material ist.

14. Die Elektrode (100) für eine Brennstoffzelle nach Anspruch 13, wobei das Übergangsmetall aus der aus Ru, Os, Co, Pd, Ga, Ti, V, Cr, Mn, Fe, Co, Ni, Cu, Zn und Kombinationen derselben bestehenden Gruppe ausgewählt ist.

15. Eine Membran-Elektroden-Anordnung (10) für eine Brennstoffzelle, umfassend eine Polymerelektrolytmembran (110); und mindestens zwei Elektroden (100) gemäß irgendeinem der Ansprüche 1 bis 14, die entsprechend auf beiden Seiten der Polymerelektrolytmembran (110) angeordnet sind.

16. Die Membran-Elektroden-Anordnung (10) für eine Brennstoffzelle nach Anspruch 15, wobei die Polymerelektrolytmembran (110) ein aus der aus Polymeren auf Perfluorbasis, Polymeren auf Benzimidazolbasis, Polymeren auf Polyimidbasis, Polymeren auf Polyetherimidbasis, Polymeren auf Polyphenylensulfitbasis, Polymeren auf Polysulfonbasis, Polymeren auf Polyethersulfonbasis, Polymeren auf Polyetherketonbasis, Polymeren auf Polyetheretherketonbasis und Polymeren auf Polyphenylquinoxalinbasis bestehenden Gruppe ausgewähltes Protonen leitendes Polymer ist.

17. Die Membran-Elektroden-Anordnung (10) für eine Brennstoffzelle nach Anspruch 15, wobei die Polymerelektrolytmembran (110) ein aus der aus Poly(perfluorsulfonsäure), Poly(perfluorcarbonsäure), Copolymeren von Tetrafluorethylen und Fluorvinylether mit einer Sulfonsäuregruppe, entfluorierten Polyetherketonsulfiden, Arylketonen, Poly(2,2'-(m-phenylen)-5,5'-benzimidazol) und Poly(2,5-benzimidazol) bestehenden Gruppe ausgewähltes Protonen leitendes Polymer ist.

18. Ein Brennstoffzellensystem umfassend eine Elektrizität erzeugende Einheit (310), eine Brennstoff liefernde Einheit (320) zum Liefern eines Wasserstoff enthaltenden Brennstoffs an die Elektrizität erzeugende Einheit (310); und eine Oxidationsmittel liefernde Einheit (330) zum Liefern eines Oxidationsmittels an die Elektrizität erzeugende Einheit (310), wobei die Elektrizität erzeugende Einheit (310) eine Vielzahl von Membran-Elektroden-Anordnungen (300) gemäß irgendeinem der Ansprüche 15 bis 17 sowie Separatoren (301) umfasst.

19. Ein Verfahren zur Herstellung einer Elektrode (100) für eine Brennstoffzelle, wobei das Verfahren Folgendes umfasst:
Bereitstellen eines Elektrodensubstrats (101);
Ausbilden einer mikroporösen Schicht (102) auf dem Elektrodensubstrat (101);
Bereitstellen eines ersten Katalysators zum Synthetisieren von Nano-Kohlenstoff auf der mikroporösen Schicht (102);
lokales Erwärmen des ersten Katalysators, während der erste Katalysator einem Kohlenstoff enthaltenden reaktiven Gas ausgesetzt wird, um eine Nano-Kohlenstoff-Schicht (103) auf der mikroporösen Schicht (102) zu züchten; und
Auftragen eines zweiten Katalysators (105) auf der Nano-Kohlenstoff Schicht (103) zum Ausbilden einer Katalysatorschicht (107).

20. Das Verfahren nach Anspruch 19, wobei das Elektrodensubstrat (101) aus der aus Kohlepapier, Kohlenstoffgewebe und Kohlenstofffilz bestehenden Gruppe ausgewählt wird.

21. Das Verfahren nach Anspruch 19, wobei das Elektrodensubstrat (101) eine Stärke von 10µm bis 1000µm aufweist.

22. Das Verfahren nach Anspruch 19, wobei die mikroporöse Schicht (102) eine Stärke von 1µm bis 100µm aufweist.

23. Das Verfahren nach Anspruch 19, wobei die mikroporöse Schicht (102) ein aus der aus Kohlenstoffpulver, Graphit, Fulleren (C60), Industrieruß, Acetylenruß, Aktivkohle, Nano-Kohlenstoff, Kohlenstoff-Nanoröhre, Kohlenstoff-Nanofaser, Kohlenstoff-Nanodraht, Kohlenstoff-Nanohorn und Kohlenstoff-Nanoring bestehenden Gruppe ausgewähltes Material umfasst.

24. Das Verfahren nach Anspruch 19, wobei der erste Katalysator aus der aus Fe, Ni, Co, Y, Pd, Pt, Au, Pd, Ga, Ti, V, Cr, Mn, Cu, Ta, W, Mo, Al, Legierungen derselben und Metall enthaltenden Carbiden, Boriden, Oxiden, Nitriden, Sulfiden, Sulfaten und Nitraten bestehenden Gruppe ausgewählt wird.

25. Das Verfahren nach Anspruch 19, wobei der erste Katalysator durch ein aus Elektrophorese, thermischem Spritzen und Sputtern ausgewähltes Verfahren eingeführt wird.

26. Das Verfahren nach Anspruch 19, wobei das reaktive Gas aus der aus Kohlenwasserstoffgasen, Kohlenstoffmonoxid und Kohlenstoffdioxid bestehenden Gruppe ausgewählt wird.

27. Das Verfahren nach Anspruch 19, wobei das lokale Erwärmen des Katalysators durch ein aus Mikrowellenbestrahlung, elektromagnetischer Induktionserwärmung, Lasererwärmung und Hochfrequenz-(RF-)erwärmung ausgewähltes Verfahren durchgeführt wird.

28. Das Verfahren nach Anspruch 19, wobei die Katalysatorschicht (107) zu einer Stärke von 0,05µm bis 10µm ausgebildet wird.

29. Das Verfahren nach Anspruch 19, wobei der Nano-Kohlenstoff der Nano-Kohlenstoff-Schicht (103) aus der aus Kohlenstoff-Nanoröhren (CNT), Kohlenstoff-Nanofasem, Kohlenstoff-Nanodrähten, Kohlenstoff-Nanohörnern und Kohlenstoff-Nanoringen bestehenden Gruppe ausgewählt wird.

30. Das Verfahren nach Anspruch 19, wobei der Nano-Kohlenstoff der Nano-Kohlenstoff-Schicht (103) in einer zu der mikroporösen Schicht (102) senkrechten Schicht gezüchtet wird.

31. Das Verfahren nach Anspruch 19, wobei der Nano-Kohlenstoff einen Durchmesser von 1 bis 500 nm aufweist.

32. Das Verfahren nach Anspruch 19, wobei die Katalysatorschicht (107) einen Katalysator (105) umfasst, der in einer Menge zwischen 0,001 und 0,5 mg/cm² bereitgestellt wird.

33. Das Verfahren nach Anspruch 19, wobei die Katalysatorschicht (107) eine spezifische Oberfläche von 10 bis 500 m²/g aufweist.

34. Das Verfahren nach Anspruch 19, wobei die Katalysatorschicht (107) durch Abscheiden eines Metallkatalysators (105) auf der Nano-Kohlenstoff-Schicht (103) gebildet wird.

35. Das Verfahren nach Anspruch 34, wobei der Metallkatalysator (105) unter Verwendung eines aus Sputtern, physikalischer Gasphasenabscheidung (PVD), plasmaunterstützter chemischer Gasphasenabscheidung (PECVD), thermischer chemischer Gasphasenabscheidung, Elektronenstrahlverdampfung, vakuumthermischer Verdampfung, Laserablation und thermischer Verdampfung ausgewählten Verfahrens abgeschieden wird.

36. Das Verfahren nach Anspruch 34, ferner umfassend Entfernen des ersten Katalysators von der Katalysatorschicht (107).

37. Das Verfahren nach Anspruch 36, wobei der erste Katalysator durch Säurebehandlung entfernt wird.

## Revendications

1. Electrode (100) destinée à une pile à combustible, comprenant :
un substrat d'électrode (101) ;
une couche microporeuse (102) sur le substrat d'électrode (101), dans lequel un facteur de rugosité de la couche microporeuse (102) est dans la gamme de 5 à 100 ;
une couche de nanocarbone (103, 203) sur une surface de la couche microporeuse (102) ; et
un catalyseur (105) qui est appliqué sur la couche de nanocarbone (103) pour former une couche de catalyseur (107).

2. Electrode (100) destinée à une pile à combustible selon la revendication 1, dans laquelle le substrat d'électrode (101) comprend un matériau sélectionné dans le groupe constitué d'un papier de carbone, d'un tissu de carbone et d'un feutre de carbone.

3. Electrode (100) destinée à une pile à combustible selon la revendication 1, dans laquelle le substrat d'électrode (101) a une épaisseur comprise entre 10 µm et 1000 µm.

4. Electrode (100) destinée à une pile à combustible selon la revendication 1, dans laquelle la couche microporeuse (102) a une épaisseur comprise entre 1 µm et 100 µm.

5. Electrode (100) destinée à une pile à combustible selon la revendication 1, dans laquelle la couche microporeuse (102) comprend un matériau sélectionné dans le groupe constitué d'une poudre de carbone, de graphite, de fullerène (C60), de noir de carbone, de noir d'acétylène, de charbon actif, de nanocarbone, d'un nanotube de carbone, d'une nanofibre de carbone, d'un nanofil de carbone, d'un nanocornet de carbone et d'une nanobague de carbone.

6. Electrode (100) destinée à une pile à combustible selon la revendication 1, dans laquelle la couche de catalyseur (107) a une épaisseur comprise entre 0,05 µm et 10 µm.

7. Electrode (100) destinée à une pile à combustible selon la revendication 1, dans laquelle le nanocarbone est sélectionné dans le groupe constitué de nanotubes de carbone (CNT), de nanofibres de carbone, de nanofils de carbone, de nanocornets de carbone et de nanobagues de carbone.

8. Electrode (100) destinée à une pile à combustible selon la revendication 1, dans laquelle on fait croître directement le nanocarbone sur une surface de la couche microporeuse (102).

9. Electrode (100) destinée à une pile à combustible selon la revendication 1, dans laquelle le nanocarbone a un diamètre compris entre 1 et 500 nm.

10. Electrode (100) destinée à une pile à combustible selon la revendication 1, dans laquelle le catalyseur (105) est fourni en une quantité comprise entre 0,001 et 0,5 mg/cm².

11. Electrode (100) destinée à une pile à combustible selon la revendication 10, dans laquelle le catalyseur (105) est fourni en une quantité comprise entre 0,01 et 0,05 mg/cm².

12. Electrode (100) destinée à une pile à combustible selon la revendication 1, dans laquelle la couche de catalyseur (107) a une surface spécifique comprise entre 10 et 500 m²/g.

13. Electrode (100) destinée à une pile à combustible selon la revendication 1, dans laquelle le catalyseur (105) est un matériau sélectionné dans le groupe constitué du platine, du ruthénium, de l'osmium, d'alliages de métaux de transition du platine et de leurs combinaisons.

14. Electrode (100) destinée à une pile à combustible selon la revendication 13, dans laquelle le métal de transition est sélectionné dans le groupe constitué de Ru, Os, Co, Pd, Ga, Ti, V, Cr, Mn, Fe, Co, Ni, Cu, Zn, et de leurs combinaisons.

15. Ensemble membrane-électrode (10) destiné à une pile à combustible, comprenant une membrane en électrolyte polymère (110) ; et au moins deux électrodes (100) selon l'une quelconque des revendications 1 à 14, respectivement positionnées des deux côtés de la membrane en électrolyte polymère (110).

16. Ensemble membrane-électrode (10) destiné à une pile à combustible selon la revendication 15, dans lequel la membrane en électrolyte polymère (110) est un polymère conducteur de protons sélectionné dans le groupe constitué de polymères perfluorés, de polymères à base de benzimidazole, de polymères à base de polyimide, de polymères à base de polyétherimide, de polymères à base de sulfure de polyphénylène, de polymères à base de polysulfone, de polymères à base de polyéthersulfone, de polymères à base de polyéthercétone, de polymères à base de polyéther-éthercétone et de polymères à base de polyphénylquinoxaline.

17. Ensemble membrane-électrode (10) destiné à une pile à combustible selon la revendication 15, dans lequel la membrane en électrolyte polymère (110) est un polymère conducteur de protons sélectionné dans le groupe constitué d'un poly(acide perfluorosulfonique), du poly(acide perfluorocarboxylique), de copolymères de tétrafluor-éthylène et d'éther fluorovinylique contenant des groupes d'acide sulfonique, des sulfures de polyéthercétones défluorés, des aryl-cétones, une poly(2,2'-(m-phénylène)-5,5'-bibenzimidazole) et une poly(2,5-benzimidazole).

18. Système de pile à combustible comprenant une unité génératrice d'électricité (310), une unité d'alimentation en carburant (320) destinée à alimenter en un carburant comprenant de l'hydrogène à l'unité génératrice d'électricité (310) ; et une unité d'alimentation en oxydant (330) destinée à alimenter en oxydant l'unité génératrice d'électricité (310), dans lequel l'unité génératrice d'électricité (310) comprend une pluralité d'ensembles membrane-électrode (300) selon l'une quelconque des revendications 15 à 17 et des séparateurs (301).

19. Procédé de préparation d'une électrode (100) destinée à une pile à combustible, le procédé consistant à :
utiliser un substrat d'électrode (101) ;
former une couche microporeuse (102) sur le substrat d'électrode (101) ;
appliquer un premier catalyseur destiné à synthétiser du nanocarbone sur la couche microporeuse (102) ;
chauffer localement le premier catalyseur tout en exposant le premier catalyseur à un gaz réactif contenant du carbone pour faire croître une couche de nanocarbone (103) sur la couche microporeuse (102) ; et
appliquer un second catalyseur (105) sur la couche de nanocarbone (103) pour former une couche de catalyseur (107).

20. Procédé selon la revendication 19, dans lequel le substrat d'électrode (101) est sélectionné dans le groupe constitué d'un papier de carbone, d'un tissu de carbone et d'un feutre de carbone.

21. Procédé selon la revendication 19, dans lequel le substrat d'électrode (101) a une épaisseur comprise entre 10 µm et 1000 µm.

22. Procédé selon la revendication 19, dans lequel la couche microporeuse (102) a une épaisseur comprise entre 1 µm et 100 µm.

23. Procédé selon la revendication 19, dans lequel la couche microporeuse (102) comprend un matériau sélectionné dans le groupe constitué d'une poudre de carbone, de graphite, de fullerène (C60), de noir de carbone, de noir d'acétylène, de charbon actif, de nanocarbone, d'un nanotube de carbone, d'une nanofibre de carbone, d'un nanofil de carbone, d'un nanocornet de carbone et d'une nanobague de carbone.

24. Procédé selon la revendication 19, dans lequel le premier catalyseur est sélectionné dans le groupe constitué de Fe, Ni, Co, Y, Pd, Pt, Au, Pd, Ga, Ti, V, Cr, Mn, Cu, Ta, W, Mo, Al, d'alliages de ceux-ci et de carbures contenant des métaux, de borures, d'oxydes, de nitrures, de sulfures, de sulfates et de nitrates.

25. Procédé selon la revendication 19, dans lequel le premier catalyseur est introduit par un procédé sélectionné parmi l'électrophorèse, un procédé de pulvérisation thermique, et une pulvérisation cathodique.

26. Procédé selon la revendication 19, dans lequel le gaz réactif est sélectionné dans le groupe constitué de gaz hydrocarbonés, de monoxyde de carbone et de dioxyde de carbone.

27. Procédé selon la revendication 19, dans lequel le chauffage local du catalyseur est effectué par un procédé sélectionné parmi une exposition aux micro-ondes, un chauffage induit par voie électromagnétique, un chauffage au laser et un chauffage à haute fréquence (RF).

28. Procédé selon la revendication 19, dans lequel la couche de catalyseur (107) est formée sur une épaisseur comprise entre 0,05 µm et 10 µm.

29. Procédé selon la revendication 19, dans lequel le nanocarbone de la couche de nanocarbone (103) est sélectionné dans le groupe constitué de nanotubes de carbone (CNT), de nanofibres de carbone, de nanofils de carbone, de nanocornets de carbone, et de nanobagues de carbone.

30. Procédé selon la revendication 19, dans lequel le nanocarbone de la couche de nanocarbone (103) est formé par croissance dans une direction perpendiculaire à la couche microporeuse (102).

31. Procédé selon la revendication 19, dans lequel le nanocarbone a un diamètre compris entre 1 et 500 nm.

32. Procédé selon la revendication 19, dans lequel la couche de catalyseur (107) comprend un catalyseur (105) fourni en une quantité comprise entre 0,001 et 0,5 mg/cm².

33. Procédé selon la revendication 19, dans lequel la couche de catalyseur (107) a une surface spécifique comprise entre 10 et 500 m²/g.

34. Procédé selon la revendication 19, dans lequel la couche de catalyseur (107) est formée par dépôt de catalyseur métallique (105) sur la couche de nanocarbone (103).

35. Procédé selon la revendication 34, dans lequel le catalyseur métallique (105) est déposé au moyen d'un procédé sélectionné parmi la pulvérisation cathodique, le dépôt physique en phase vapeur (PVD), le dépôt chimique en phase vapeur assisté par plasma (PECVD), le dépôt chimique en phase vapeur thermique, l'évaporation par faisceau d'électrons, l'évaporation thermique sous vide, l'ablation au laser et l'évaporation thermique.

36. Procédé selon la revendication 34, consistant en outre à enlever le premier catalyseur de la couche de catalyseur (107).

37. Procédé selon la revendication 36, dans lequel le premier catalyseur est enlevé par traitement à l'acide.
